# EUROPEAN PATENT SPECIFICATION

(11) **EP 3 179 099 B1**
(45) Date of publication and mention of the grant of the patent: **11.07.2018**
(21) Application number: 16199695.4
(22) Date of filing: 18.11.2016
(51) Int. Cl.: F03D 13/20, E04H 12/08, F03D 13/10

(54) **METHOD OF ASSEMBLING WIND TURBINE TOWER AND OVAL ADJUSTMENT DEVICE**
VERFAHREN ZUR MONTAGE EINES WINDTURBINENTURMS UND OVALEINSTELLVORRICHTUNG
PROCÉDÉ D'ASSEMBLAGE DE TOUR D'ÉOLIENNE ET DISPOSITIF OVALE D'AJUSTEMENT

(30) Priority: 08.12.2015 JP 2015239226
(43) Date of publication of application: 14.06.2017
(73) Proprietor: Mitsubishi Heavy Industries, Ltd., Tokyo 108-8215 (JP)
(72) Inventor: Shiraishi, Yasuaki, Tokyo, 108-8215 (JP); Yokoyama, Hiroaki, Tokyo, 108-8215 (JP); Takeuchi, Ryosuke, Hyogo, 652-0863 (JP); Teramoto, Naoto, Nagasaki, 850-0063 (JP)
(74) Representative: Henkel, Breuer & Partner

(56) References cited:
- EP-A1- 2 754 783
- EP-A2- 2 538 000

## Description

### TECHNICAL FIELD

The present disclosure relates to a method of assembling a wind turbine tower and an oval adjustment device.

### BACKGROUND ART

A wind-turbine tower of a wind turbine power generating apparatus or the like may be assembled by coupling a plurality of tower sections that constitute a wind-turbine tower.

For instance, Patent Document 1 discloses a wind turbine power generating apparatus including a tower having a structure combining a plurality of sections. The tower is divided into two sections, an upper section and a lower section, at an intermediate part in the height direction. The upper section and the lower section of the tower are coupled via a flange structure. Specifically, the tower is assembled by fastening a flange formed protruding inward and outward in the radial direction from a lower end portion of the upper section of the tower and a flange formed protruding inward and outward in the radial direction from an upper end portion of the lower section of the tower with bolts and nuts. Patent Document EP2754783 discloses a method and device of assembling a wind turbine tower by applying a force in a radial direction of the tower. A tool is used to align a pair of adjacent flanges of adjacent segments of the tower.

### Citation List

### Patent Literature

Patent Document 1: JP2013-19207A

### SUMMARY

Tower sections that constitute a wind-turbine tower may deform after being manufactured into a predetermined shape and before being assembled (e.g. during transportation).

For instance, a tower section of a large wind-turbine tower has a large diameter, and thus is more likely to deform in the radial direction due to the weight of the tower section. Furthermore, for instance, a tower section that has no flange on the edge portion has a smaller rigidity than a tower section with a flange on the edge portion, and thus is more likely to deform.

Depending on the degree of such deformation of tower sections, it may be difficult to match positions of end portions of tower sections during assembly of a wind-turbine tower, which raises a risk of inappropriate connection of tower sections.

In view of the above, an object of at least one embodiment of the present invention is to provide a method of assembling a wind-turbine tower whereby it is possible to connect tower sections appropriately.
(1) A method of assembling a wind-turbine tower which comprises a plurality of tower sections including a lower section and an upper section to be connected to the lower section, according to at least one of the present invention, comprises: a step of measuring a diameter of an upper end portion of the lower section and a diameter of a lower end portion of the upper section; a step of applying a force in a radial direction of the wind-turbine tower to at least one of the upper end portion of the lower section or the lower end portion of the upper section so as to reduce a difference between the diameter of the upper end portion of the lower section and the diameter of the lower end portion of the upper section, on the basis of a measurement result of each of the diameter of the upper end portion of the lower section and the diameter of the lower end portion of the upper section; a step of suspending the upper section above the lower section while the lower section is disposed upright so that the upper end portion of the lower section and the lower end portion of the upper section face each other; and a step of connecting the lower end portion of the upper section and the upper end portion of the lower section.
   According to the above method (1), before the upper end portion of the lower section and the lower end portion of the upper section are connected, a force in the radial direction of the wind-turbine tower is applied to at least one of the lower end portion of the upper section or the upper end portion of the lower section so that a difference between the diameter of the lower end portion of the upper section and the diameter of the upper end portion of the lower section decreases, on the basis of the measurement results of the diameters thereof. Accordingly, it is possible to reduce a difference between the diameter of the upper end portion of the lower section and the diameter of the lower end portion of the upper section, and thus the positions of the tower sections can be matched more readily. Thus, even if the lower section and/or the upper section deforms in the radial direction during transportation, for instance, it is possible to connect the upper section and the lower section appropriately.
(2) In some embodiments, in the above method (1), the method further comprises: a step of measuring each of a temperature of the lower section and a temperature of the upper section; and a step of correcting the measurement result of each of the diameter of the upper end portion of the lower section and the diameter of the lower end portion of the upper section, on the basis of measurement results of the temperatures.
   Measurement results of the diameters of the upper end portion of the lower section and the lower end portion of the upper section are affected by thermal expansion or the like of the constituent material, for instance, depending on the temperature. In this regard, according to the above method (2), the measurement results of the diameters of the upper end portion of the lower section and the lower end portion of the upper section are temperature-corrected on the basis of the measurement results of the temperatures of the upper end portion of the lower section and the lower end portion of the upper section, and thus it is possible to reduce the difference between the diameters of the upper end portion of the lower section and the lower end portion of the upper section effectively. Thus, it is possible to set the end portions of the tower sections in matching positions more reliably, and to connect the upper section and the lower section appropriately.
(3) In some embodiments, in the above method (1) or (2), the method further comprises a step of moving the upper section in an upward-and-downward direction relative to the lower section to adjust a clearance between the lower end portion of the upper section and the upper end portion of the lower section to be within a predetermined range. The step of connecting includes joining the lower end portion of the upper section and the upper end portion of the lower section by welding.
   According to the above method (3), the upper section is moved in the upward-and-downward direction relative to the lower section, and the clearance between the lower end portion of the upper section and the upper end portion of the lower section is adjusted to be within a predetermined range, and thereby it is possible to perform welding reliably between the lower end portion of the upper section and the upper end portion of the lower section.
(4) In some embodiments, in any one of the above methods (1) to (3), the connecting step includes performing automatic welding along a welding line between the upper end portion and the lower end portion by using an automatic welding machine.
   According to the above method (4), an automatic welding machine is used to move an electrode automatically along a welding line between the upper end portion and the lower end portion, and thereby it is possible to perform high-quality welding effectively, and to connect the lower end portion of the upper section and the upper end portion of the lower section.
(5) In some embodiments, in any one of the above methods (1) to (4), the step of applying a force in the radial direction includes applying an outward or inward force in the radial direction to a pair of points of application on an inner peripheral wall surface of at least one of the lower end portion of the upper section or the upper end portion of the lower section.
   According to the above method (5), an outward or inward force in the radial direction is applied to a pair of points of application on the inner peripheral wall surface of at least one of the lower end portion of the upper section or the upper end portion of the lower section, and thereby it is possible to reduce the difference between the diameters of the upper end portion of the lower section and the lower end portion of the upper section effectively.
(6) In some embodiments, in the above method (5), the pair of points of application is disposed on positions facing each other across a center of the wind-turbine tower, on the inner peripheral wall surface.
   According to the above method (6), an outward or inward force in the radial direction is applied to a pair of points of application at positions opposite from each other across the center of the wind-turbine tower, on the inner peripheral wall surface, and thereby it is possible to reduce the difference between the diameters of the upper end portion of the lower section and the lower end portion of the upper section effectively.
(7) In some embodiments, in the above method (5) or (6), the step of applying a force in the radial direction includes: connecting a first end of a wire to one of the points of application on the inner peripheral wall surface via a first bracket; connecting a second end of the wire to a second bracket; attaching a third bracket to the other one of the points of application on the inner peripheral wall surface; disposing at least one bolt so that the at least one bolt is inserted through a reaction-force receiving plate of the third bracket, the reaction-force receiving plate extending along a plane orthogonal to an extending direction of the wire, and fixing the at least one bolt to the second bracket; and applying a tension force to the at least one bolt with at least one bolt tensioner disposed on the side of the other one of the points of application across the reaction-force receiving plate.
   According to the above method (7), a bolt tensioner is used to generate a tension force in the bolt and the wire to apply an inward force in the radial direction to a pair of points of application on the inner peripheral wall surface of at least one of the lower end portion of the upper section or the upper end portion of the lower section. Accordingly, it is possible to further reduce a difference between the diameter of the upper end portion of the lower section and the diameter of the lower end portion of the upper section, and thus the positions of the end portions of the tower sections can be matched more readily and the upper section and the lower section can be connected appropriately.
(8) In some embodiments, in the above method (5) or (6), the step of applying a force in the radial direction includes: orienting an intermediate rod along a line connecting the pair of points of application; and applying an outward force in the radial direction to each of the points of application via the intermediate rod by using at least one hydraulic jack disposed between at least one end of the intermediate rod and at least one of the points of application on the inner peripheral wall surface.
   According to the above method (8), a hydraulic jack is used to apply an outward force in the radial direction to a pair of points of application on the inner peripheral wall surface of at least one of the lower end portion of the upper section or the upper end portion of the lower section. Accordingly, it is possible to further reduce a difference between the diameter of the upper end portion of the lower section and the diameter of the lower end portion of the upper section, and thus the positions of the end portions of the tower sections can be matched more readily and the upper section and the lower section can be connected appropriately.
(9) In some embodiments, in the above method (8), the intermediate rod is oriented along the line connecting the pair of points of application by rotating the intermediate rod while the intermediate rod is suspended from above.
   According to the above method (9), the intermediate rod is rotated while being suspended from above, and thereby it is possible to change the direction of the intermediate rod readily. Thus, it is possible to orient the intermediate rod along a line connecting a pair of points of application in a radial direction, and thereby an outward force in the radial direction can be easily applied to at least one of the upper end portion of the lower section or the lower end portion of the upper section in a radial direction, and to match the positions of the end portions of the tower sections more readily.
(10) An oval adjustment device for applying a tension force to a pair of points of application disposed on an inner peripheral wall surface of a tower section of a wind turbine facing each other across a center of the tower section, according to at least one embodiment of the present invention, comprises: a wire to extend along a line connecting the pair of points of application; a first bracket for connecting a first end of the wire to one of the points of application on the inner peripheral wall surface; a second bracket to be connected to a second end of the wire; a third bracket to be mounted to the other one of the points of application on the inner peripheral wall surface and including a reaction-force receiving plate to extend along a plane orthogonal to an extending direction of the wire; at least one bolt to extend along the wire between the second bracket and the third bracket, to be fixed to the second bracket, and to be inserted through the reaction-force receiving plate of the third bracket; and at least one bolt tensioner to be disposed on the side of the other one of the points of application across the reaction-force receiving plate, for applying a tension force to the at least one bolt.
   With the above configuration (10), a bolt tensioner is used to generate a tension force in the bolt and the wire to apply an inward force in the radial direction to a pair of points of application on the inner peripheral wall surface of at least one of the lower end portion of the upper section or the upper end portion of the lower section. Accordingly, it is possible to further reduce a difference between the diameter of the upper end portion of the lower section and the diameter of the lower end portion of the upper section, and thus the positions of the end portions of the tower sections can be matched more readily and the upper section and the lower section can be connected appropriately.
(11) In some embodiments, in the above configuration (10), the third bracket further includes a coupling portion to be disposed on an extension line of the wire and to couple the other one of the points of application and the reaction-force receiving plate. The at least one bolt tensioner comprises a pair of bolt tensioners disposed on opposite sides of the coupling portion.

With the above configuration (11), bolt fastening amounts can be adjusted individually for the pair of bolt tensioners disposed on either side of the coupling section coupling the other point of application and the reaction-force receiving plate, and it is possible to apply a tension force in an appropriate direction to the pair of points of application while maintaining the parallelism of the second bracket with respect to the third bracket.

According to at least one embodiment of the present invention, provided is a method of assembling a wind-turbine tower whereby it is possible to connect tower sections appropriately.

### BRIEF DESCRIPTION OF DRAWINGS

FIG. 1 is a schematic diagram of a configuration example of a wind turbine provided with a wind-turbine tower assembled by a method of assembling a wind-turbine tower according to an embodiment.
FIG. 2 is a flowchart schematically showing a method of assembling a wind-turbine tower according to an embodiment.
FIG. 3A is a bottom view of an upper section 10 according to an embodiment.
FIG. 3B is a top view of a lower section 12 according to an embodiment.
FIG. 4 is a diagram of an oval adjustment device according to an embodiment.
FIG. 5 is a diagram of a configuration of the oval adjustment device depicted in FIG. 4.
FIG. 6 is a diagram of an oval adjustment device according to an embodiment.
FIG. 7 is a diagram of a configuration of the oval adjustment device depicted in FIG. 6.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not intended to limit the scope of the present invention.

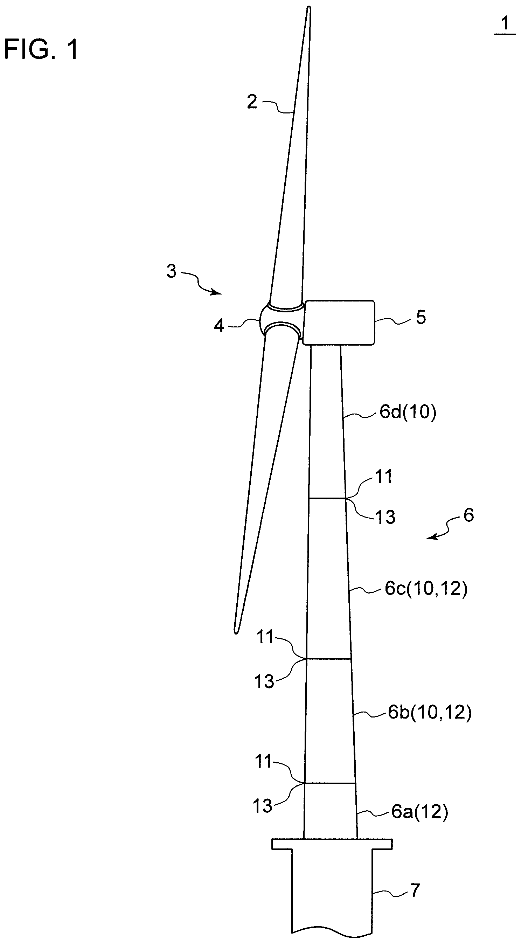

FIG. 1 is a schematic diagram of a configuration example of a wind turbine provided with a wind-turbine tower assembled by a method of assembling a wind-turbine tower according to an embodiment. As depicted in the drawing, a wind turbine 1 includes a rotor 3 including at least one blade 2 and a hub 4, a nacelle 5 supporting the rotor 3, and a wind-turbine tower 6 supporting the nacelle 5. The wind-turbine tower 6 may be disposed on a base structure 7 disposed on water or on land. The base structure 7 may be a foundation structure disposed on water or on land, or a floating structure disposed on water.

The wind turbine 1 may constitute a wind turbine power generating apparatus. In this case, the nacelle 5 may house a generator driven by rotational energy of the rotor 3, a drive train for transmitting rotational energy of the rotor 3 to the generator, or the like.

The wind-turbine tower 6 includes a plurality of tower sections. In the wind turbine 1 depicted in FIG. 1, the wind-turbine tower 6 includes four tower sections 6a to 6d. The tower sections 6a to 6d are disposed along an upward-and-downward direction (i.e., the vertical direction), and in each pair of sections disposed adjacently in the upward-and-downward direction, a lower end portion 11 of an upper section 10 disposed above and an upper end portion 13 of a lower section 12 disposed below are connected to each other to form the single wind-turbine tower 6.

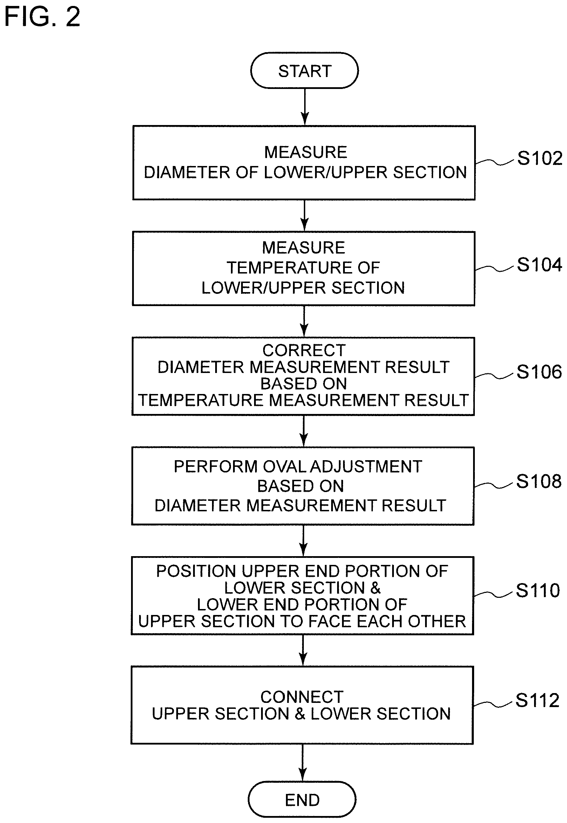

FIG. 2 is a flowchart schematically showing a method of assembling a wind-turbine tower according to an embodiment.

As shown in the flowchart of FIG. 2, in an embodiment, the diameter D_{L} of the upper end portion 13 of the lower section 12 and the diameter D_{U} of the lower end portion 11 of the upper section 10 are measured (S102). Furthermore, the temperature T_{L} of the lower section 12 and the temperature T_{U} of the upper section 10 are measured individually (S104), and the measurement results of the respective diameters D_{L}, D_{U} of the upper end portion 13 of the lower section 12 and the lower end portion 11 of the upper section 10 are corrected on the basis of the measurement results of the temperatures T_{L}, T_{U}, respectively (S106).

Next, on the basis of the measurement results of the diameter D_{L} and the diameter D_{U} obtained in steps S102 to S106, oval adjustment is performed so as to reduce the difference between the diameter D_{L} and the diameter D_{U} (S108).

The upper end portion 13 of the lower section 12 and the lower end portion 11 of the upper section 10 are positioned to face each other (S110), and then the upper end portion 13 of the lower section 12 and the lower end portion 11 of the upper section 10 are connected (S112).

It should be noted that step S104 of measuring each of the temperature T_{L} of the lower section 12 and the temperature T_{U} of the upper section 10, and step S106 of correcting the measurement results of the diameters D_{L}, D_{U} respectively on the basis of the measurement results of the temperatures T_{L}, T_{U} are optional steps and performed if needed.

Furthermore, if the method of assembling a wind-turbine tower according to the present embodiment is to be applied to the wind turbine 1 depicted in FIG. 1, the method according to the present embodiment can be applied to connection of at least one pair of tower sections disposed adjacent to each other in the upward-and-downward direction from among the four tower sections 6a to 6d constituting the wind-turbine tower 6 (i.e., the tower sections 6a and 6b, 6b and 6c, or 6c and 6d).

Furthermore, step S108 of performing oval adjustment to reduce the difference between the diameter D_{L} and the diameter D_{U} maybe performed after step S110 of positioning the upper end portion 13 of the lower section 12 and the lower end portion 11 of the upper section 10 to face each other and before step S112 of connecting the upper end portion 13 of the lower section 12 and the lower end portion 11 of the upper section 10.

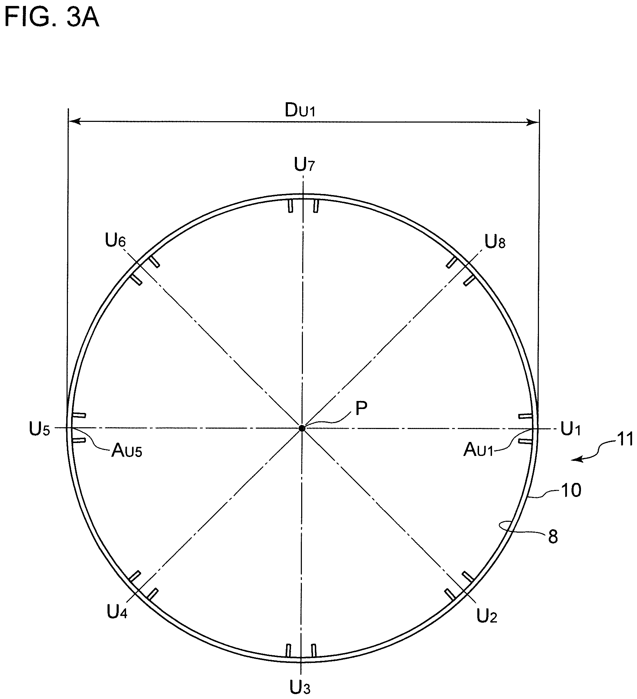

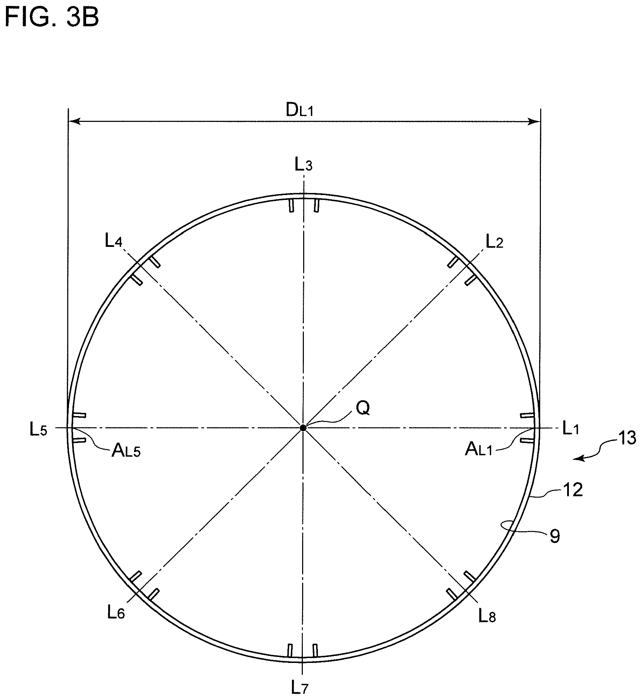

Described in detail below with reference to FIGs. 3 to 7 are steps in the method of assembling a wind-turbine tower shown in the flowchart of FIG. 2. In the example described below, the tower section 6b is referred to as the upper section 10, and the tower section 6a as the lower section 12.

FIGs. 3 to 7 are each a diagram for describing a method of assembling a wind-turbine tower according to an embodiment.

In step S102, the diameter D_{L} of the upper end portion 13 of the lower section 12 (tower section 6a) and the diameter D_{U} of the lower end portion 11 of the upper section 10 (tower section 6b) are measured.

The positions in the circumferential direction (i.e. positions in the circumferential direction of the wind-turbine tower 6) for measuring the diameter D_{L} and the diameter D_{U} at the upper end portion 13 of the lower section 12 and the lower end portion 11 of the upper section 10 are not particularly limited. In some embodiments, when the upper section 10 and the lower section 12 are connected in the following step S112, the diameter D_{L} of the upper end portion 13 of the lower section 12 and the diameter D_{U} of the lower end portion 11 of the upper section 10 are measured at positions in the circumferential direction that correspond to (face) each other in the upward-and-downward direction (i.e. vertical direction) of the wind-turbine tower 6.

FIG. 3A is a bottom view of the upper section 10 according to an embodiment, and FIG. 3B is a top view of the lower section 12 according to an embodiment.

In an embodiment, eight measurement points U₁ to U₈ may be disposed on the lower end portion 11 of the upper section 10 as depicted in FIG. 3A, and measurement points L₁ to L₈ corresponding to the measurement points U₁ to U₈ may be disposed on the upper end portion 13 of the lower section 12 as depicted in FIG. 3B. Herein, U₁ to U₈ and L₁ to L₈ are measurement points to be disposed on respective positions in the circumferential direction that form opposing pairs in the upward-and-downward direction (i.e. vertical direction) of the wind-turbine tower 6, when the upper section 10 and the lower section 12 are connected in the following step S112. For instance, in step S112, the upper section 10 and the lower section 12 are connected while the measurement point U₁ at the lower end portion 11 of the upper section 10 and the measurement point L₁ at the upper end portion 13 of the lower section 12 face each other in the upward-and-downward direction.

The diameter D_{U} of the lower end portion 11 of the upper section 10 may be measured at at least one of the measurement points U₁ to U₈ disposed on the lower end portion 11 of the upper section 10, and the diameter D_{L} may be measured at the measurement point corresponding to the measurement point at which the diameter D_{U} of the upper section 10 is measured, from among the measurement points L₁ to L₈ on the upper end portion 13 of the lower section 12.

In the example depicted in FIGs. 3A and 3B, the measurement points U₁ to U₈ are disposed at intervals of 45° in the circumferential direction about the center axis P of the upper section 10, while the measurement points L₁ to L₈ are disposed at intervals of 45° in the circumferential direction about the center axis Q of the lower section 12.

For instance, the diameter D_{U1} passing through the center axis P of the upper section 10 and the measurement point U₁ (and the measurement point U₅ disposed opposite to U₁ across the center axis P in the radial direction) may be measured for the lower end portion 11 of the upper section 10, and the diameter D_{L1} passing through the center axis Q of the lower section 12 and the measurement point L₁ (and the measurement point L₅ disposed opposite from L₁ across the center axis Q in the radial direction) may be measured for the upper end portion 13 of the lower section 12.

Furthermore, the diameter D_{U} and the diameter D_{L} may be measured at different multiple positions in the circumferential direction. For instance, diameters D_{U1}, D_{U2}, D_{U3}, and D_{U4} passing through the center axis P of the upper section 10 and the measurement points U₁, U₂, U₃, and U₄ (and the measurement points U₅ to U₈ disposed opposite from U₁ to U₄ across the center axis P in the radial direction), respectively, may be measured for the lower end portion 11 of the upper section 10, and diameters D_{L1}, D_{L2}, D_{L3}, and D_{L4} passing through the center axis Q of the lower section 12 and the measurement points L₁, L₂, L₃, and L₄ (and the measurement points L₅ to L₈ disposed opposite from L₁ to L₄ across the center axis Q in the radial direction), respectively, may be measured for the upper end portion 13 of the lower section 12.

In step S104, the temperature T_{L} of the lower section 12 and the temperature T_{U} of the upper section 10 are measured individually.

At this time, in step S102, the temperature T_{L} of the lower section 12 and the temperature T_{U} of the upper section 10 may be measured at the measurement points at which the diameters of the lower section 12 and the upper section 10 are measured in S102.

For instance, if the diameter D_{U1} passing through the center axis P of the upper section 10, the measurement point U₁, and the measurement point U₅ is measured, temperatures T_{U1} and T_{U5} may be measured at the measurement points U₁ and U₅, respectively. Furthermore, the temperature is measured similarly at other measurement points of the upper section 10 and measurement points of the lower section 12.

In step S106, the measurement results of the respective diameters D_{L}, D_{U} of the upper end portion 13 of the lower section 12 and the lower end portion 11 of the upper section 10 are corrected on the basis of the respective measurement results of temperature obtained in step S104.

For instance, for the diameter D_{U1} passing through the center axis P, the measurement point U₁, and the measurement point U₅ of the upper section 10, the measurement result of the diameter D_{U1} is corrected on the basis of the measurement results of the temperatures T_{U1} and T_{U5} measured at the measurement points U₁ and U₅, respectively.

If time, place, or the like for measuring the diameter is different between the upper section 10 and the lower section 12, the measurement result of each diameter may be affected due to thermal expansion or the like of the material constituting the upper section 10 and the lower section 12 depending on change in the temperature or the sunshine condition. Thus, in step S106, the measurement results of the diameter are corrected on the basis of the measurement results of the temperature, and thereby it is possible to reduce the influence of the temperature on the measurement results of the diameter of the upper section 10 and the lower section 12.

In step S108, on the basis of the measurement results of the diameter D_{L} and the diameter D_{U} obtained in steps S102 to S106, oval adjustment is performed so as to reduce the difference between the diameter D_{L} and the diameter D_{U}, by applying a force in the radial direction of the wind-turbine tower 6 to at least one of the upper end portion 13 of the lower section 12 or the lower end portion 11 of the upper section 10.

In some embodiments, in step S108, an outward or inward force in the radial direction of the wind-turbine tower 6 is applied to a pair of points of application on the inner peripheral wall surface of at least one of the lower end portion 11 of the upper section 10 or the upper end portion 13 of the lower section 12.

For instance, in the example depicted in FIGs. 3A and 3B, if an expression D_{L1}>D_{U1} is satisfied by the relationship between the measurement result of the diameter D_{L1} passing through the measurement points U₁ and U₅ at the lower end portion 11 of the upper section 10 and the measurement result of the diameter D_{L1} passing through the measurement points L₁ and L₅ at the upper end portion 13 of the lower section 12, an inward force in the radial direction of the wind-turbine tower 6 is applied to a pair of points of application on the inner peripheral wall surface 8 of the lower end portion 11 of the upper section 10 to reduce the diameter D_{L1}, and/or an outward force in the radial direction of the wind-turbine tower 6 is applied to a pair of points of application on the inner peripheral wall surface 9 of the upper end portion 1 3 of the lower section 12 to increase the diameter D_{U1}.

In this case, the pair of points of application may be disposed on positions that face each other across the center of the wind-turbine tower 6 on the inner peripheral wall surface of at least one of the lower end portion 11 of the upper section 10 or the upper end portion 13 of the lower section 12.

In an embodiment, the pair of points of application on the inner peripheral wall surface 8 of the lower end portion 11 of the upper section 10 may be points of application A_{U1}, A_{U5} on the inner peripheral wall surface 8 corresponding to the measurement points U₁ and U₅ (see FIG. 3A). Alternatively, the pair of points of application on the inner peripheral wall surface 9 of the upper end portion 13 of the lower section 12 may be points of application A_{L1}, A_{L5} on the inner peripheral wall surface 8 corresponding to the measurement points L₁ and L₅ (see FIG. 3B).

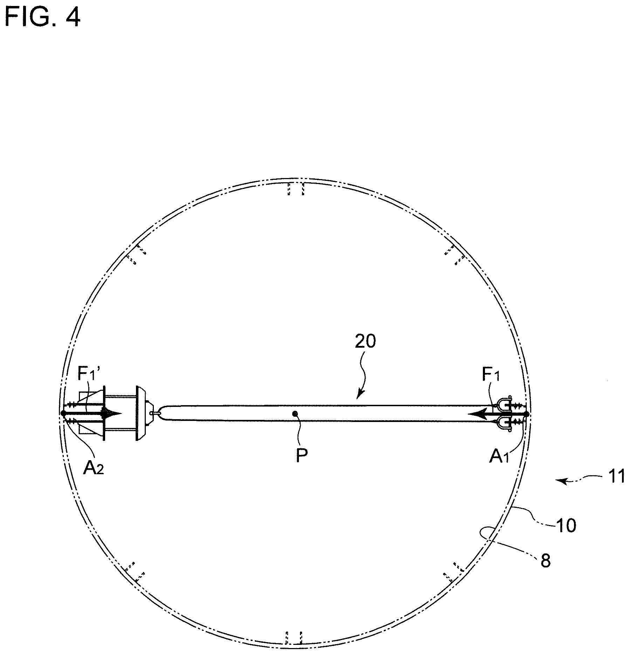

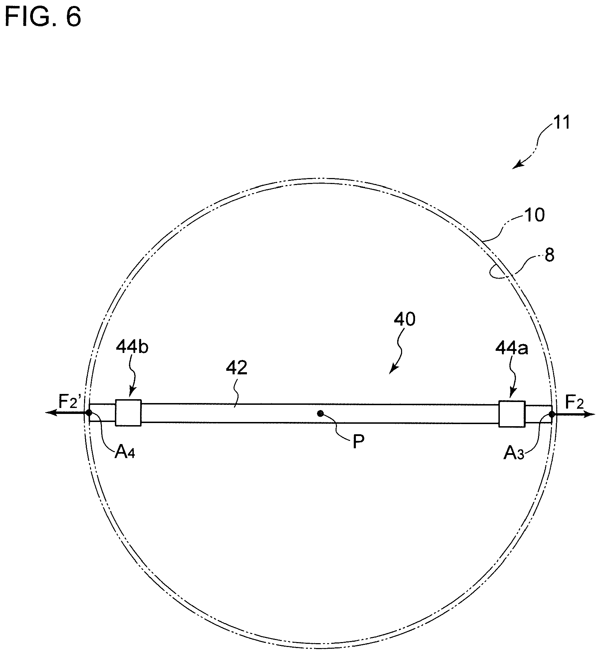

FIGs. 4 and 6 are each a diagram of an oval adjustment device according to an embodiment.

In step S108, for instance, forces F₁, F₁' directed inward in the radial direction of the wind-turbine tower 6 may be applied to a pair of points of application A₁, A₂ on the inner peripheral wall surface 8 of the lower end portion 11 of the upper section 10 or the inner peripheral wall surface 9 of the upper end portion 13 of the lower section 12, by using the oval adjustment device 20 depicted in FIG. 4.

Alternatively, in step S108, for instance, forces F₂, F₂' directed outward in the radial direction of the wind-turbine tower 6 may be applied to a pair of points of application A₃, A₄ on the inner peripheral wall surface 8 of the lower end portion 11 of the upper section 10 or the inner peripheral wall surface 9 of the upper end portion 13 of the lower section 12, by using the oval adjustment device 40 depicted in FIG. 6.

The configurations of the oval adjustment device 20 and the oval adjustment device 40 will be described below.

In step S110, while the lower section 12 is disposed upright, the upper section 10 is suspended above the lower section 12 by using a crane or the like so that the upper end portion 13 of the lower section 12 and the lower end portion 11 of the upper section 10 face each other.

In step S112, the lower end portion 11 of the upper section 10 and the upper end portion 13 of the lower section 12 are connected.

In some embodiments, before step S112, the upper section 10 may be rotated in the circumferential direction relative to the lower section 12 so that the position of the upper section 10 coincides with the position of the lower section 12 in the circumferential direction. At this time, the upper section 10 may be provided with a chain block, and revolved with respect to the lower section 12 by using the chain block.

The step of rotating the upper section 10 relative to the lower section 12 in the circumferential direction may be performed if the protruding portions 14 are not in the same positions as the corresponding receiving portions 16 in the circumferential direction when the upper end portion 13 of the lower section 12 and the lower end portion 11 of the upper section 10 are positioned so as to face each other in step S102.

In some embodiments, in step S112, the lower end portion 11 of the upper section 10 and the upper end portion 13 of the lower section 12 are joined by welding.

In this case, the method further includes a step of, before joining the lower end portion 11 of the upper section 10 and the upper end portion 13 of the lower section 12 by welding, moving the upper section 10 in the upward-and-downward direction relative to the lower section 12, and adjusting the clearance between the lower end portion 11 of the upper section 10 and the upper end portion 13 of the lower section 12 to be within a predetermined range. Herein, the clearance between the lower end portion 11 of the upper section 10 and the upper end portion 13 of the lower section 12 is a root gap for welding the lower end portion 11 of the upper section 10 and the upper end portion 13 of the lower section 12.

By adjusting the clearance to be within a predetermined range as described above, it is possible to weld the lower end portion 11 of the upper section 10 and the upper end portion 13 of the lower section 12 reliably.

In the step of adjusting the clearance, the clearance may be adjusted by moving the upper section 10 in the upward-and-downward direction by using a crane suspending the upper section 10, or a hydraulic jack disposed on the upper section 10 or the lower section 12, for instance.

In some embodiments, in step S112, the lower end portion 11 of the upper section 10 and the upper end portion 13 of the lower section 12 are joined by automatic welding. Specifically, an automatic welding machine is used to move an electrode automatically along a welding line between the upper end portion 13 of the lower section 12 and the lower end portion 11 of the upper section 10.

In some embodiments, in step S112, the lower end portion 11 of the upper section 10 and the upper end portion 13 of the lower section 12 may be joined by manual welding by manpower.

Alternatively, in some embodiments, in step S112, the lower end portion 11 of the upper section 10 and the upper end portion 13 of the lower section 12 may be joined partly by automatic welding, and partly by manual welding.

In some embodiments, in step S112, the lower end portion 11 of the upper section 10 and the upper end portion 13 of the lower section 12 may be connected by fastening a flange (not depicted) disposed on the lower end portion 11 of the upper section 10 and a flange (not depicted) disposed on the upper end portion 13 of the lower section 12 with bolts and nuts.

According to the above described method of assembling the wind-turbine tower 6 according to some embodiments, before the upper end portion 13 of the lower section 12 and the lower end portion 11 of the upper section 10 are connected, a force in the radial direction of the wind-turbine tower 6 is applied to at least one of the lower end portion 11 of the upper section 10 or the upper end portion 13 of the lower section 12 so that a difference between the diameter of the lower end portion 11 of the upper section 10 and the diameter of the upper end portion 13 of the lower section 12 decreases, on the basis of the measurement results of the diameters thereof. Accordingly, it is possible to reduce a difference between the diameter of the upper end portion 13 of the lower section 12 and the diameter of the lower end portion 11 of the upper section 10, and thus the positions of the upper end portion 1 3 of the lower section 12 and the lower end portion 11 of the upper section 10 can be matched more readily. Thus, even if the lower section 12 and/or the upper section 10 deforms in the radial direction during transportation, for instance, it is possible to connect the upper section 10 and the lower section 12 appropriately.

Next, an oval adjustment device according to some embodiments will be described with reference to FIGs. 4 to 7. In the above described step S108, by using an oval adjustment device according to some embodiments described below, an outward or inward force in the radial direction of the wind-turbine tower 6 can be applied to a pair of points of application on the inner peripheral wall surface of at least one of the lower end portion 11 of the upper section 10 or the upper end portion 13 of the lower section 12.

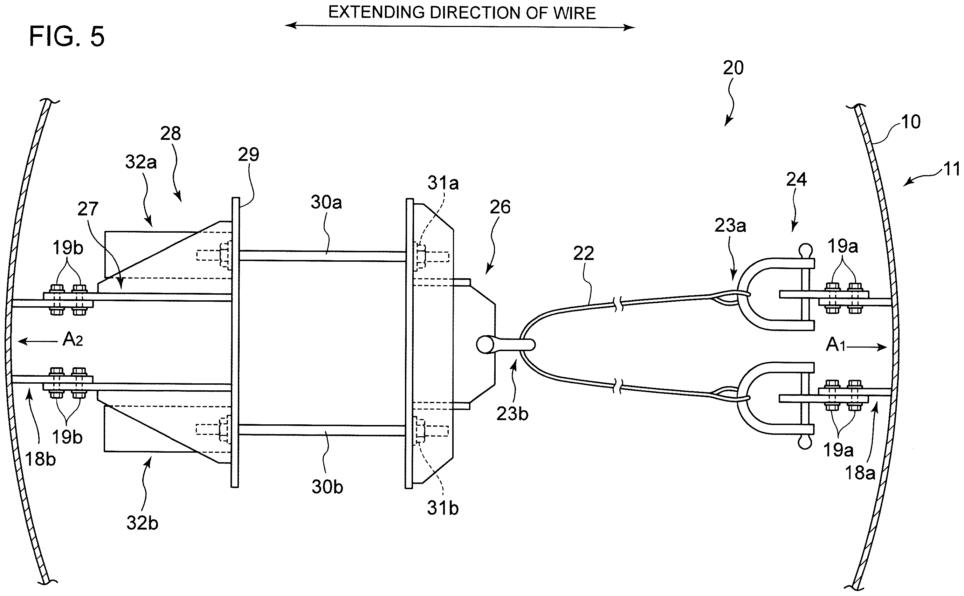

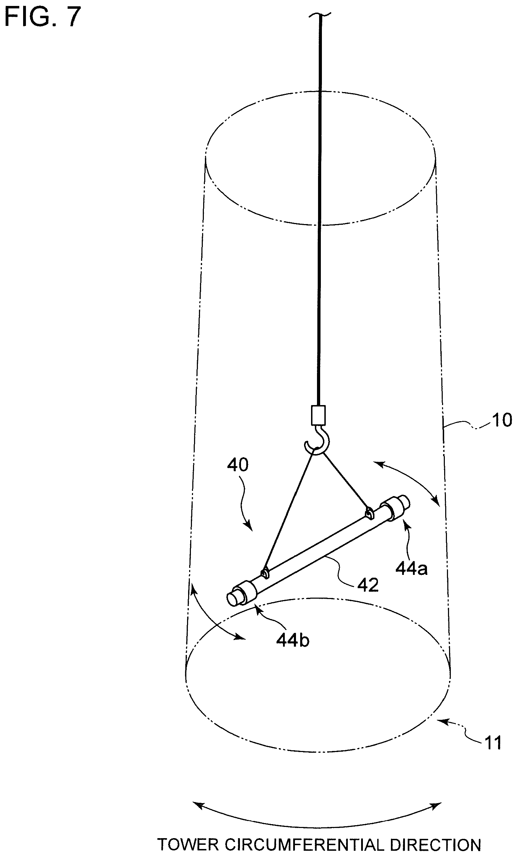

FIGs. 5 and 7 are configuration diagrams of the oval adjustment devices depicted in FIGs. 4 and 6, respectively.

The oval adjustment devices 20, 40 according to following embodiments are for applying a tension force to a pair of points of application disposed opposite to each other across the center of a tower section of the wind turbine 1, on the inner peripheral wall surface of the tower section.

While the oval adjustment devices 20, 40 can be used for both of the lower end portion 11 of the upper section 10 and the upper end portion 13 of the lower section 12, the following example describes the oval adjustment device 20 being applied to the lower end portion 11 of the upper section 10.

The oval adjustment device 20 depicted in FIG. 4 is for applying a tension force to a pair of points of application disposed opposite to each other across the center (center axis P) of the upper section 10 on the inner peripheral wall surface 8 at the lower end portion 11 of the upper section 10. If a tension force is to be applied to a pair of points of application A₁, A₂ on the inner peripheral wall surface 8 by using the oval adjustment device 20, the oval adjustment device 20 is disposed along a line connecting the pair of points of application A₁, A₂, as depicted in FIG. 4.

As depicted in FIG. 5, the oval adjustment device 20 includes a wire 22, the first bracket 24, the second bracket 26, the third bracket 28, bolts 30a, 30b, and bolt tensioners 32a, 32b, extending along the line connecting the pair of points of application A₁, A₂.

The first bracket 24 is fixed to a mounting portion 18a disposed on the inner peripheral wall surface 8 of the upper section 10 with bolts 19a, and thereby an end 23a of the wire 22 is connected to the point of application A₁ on the inner peripheral wall surface 8.

The second bracket 26 is connected to the other end 32b of the wire 22.

The third bracket 28 is fixed to a mounting portion 18b disposed on the inner peripheral wall surface 8 with bolts 19b and thereby attached to the other point of application A₂, and includes a reaction-force receiving plate 29 extending along a plane that is orthogonal to the extending direction of the wire 22.

The bolts 30a, 30b extend along the wire 22 between the second bracket 26 and the third bracket 28, are fixed to the second bracket 26 with nuts 31a, 31b, and are inserted through the reaction-force receiving plate 29 of the third bracket 28.

The bolt tensioners 32a, 32b are for applying a tension force to the bolts 30a, 30b, and are disposed on the side of the point of application A₂ opposite from the bolts 30a, 30b across the reaction-force receiving plate 29.

In the above described oval adjustment device 20, if the bolt tensioners 32a, 32b are started, the bolt tensioners 32a, 32b generate a tension force corresponding to bolt-fastening amounts of the bolts 30a, 30b in the bolts 30a, 30b and the wire 22. Accordingly, forces F₁, F₁' (see FIG. 4) directed inward in the radial direction can be applied to the pair of points of application A₁, A₂ on the inner peripheral wall surface 8.

In the oval adjustment device 20 depicted in FIG. 5, the third bracket 28 further includes a coupling section 27 disposed on an extension line of the wire 22 and coupling the point of application A₂ and the reaction-force receiving plate 29. The pair of bolt tensioners 32a, 32b is disposed on either side of the coupling section 27.

In this case, the bolt fastening amounts can be adjusted individually for the pair of bolt tensioners 32a, 32b disposed on either side of the coupling section 27, and it is possible to apply a tension force in an appropriate direction to the pair of points of application A₁, A₂ while maintaining the parallelism of the second bracket 26 with respect to the third bracket 28.

The oval adjustment device 40 depicted in FIG. 6 is for applying a tension force to a pair of points of application disposed opposite to each other across the center (center axis P) of the upper section 10 on the inner peripheral wall surface 8 at the lower end portion 11 of the upper section 10. If a tension force is to be applied to a pair of points of application A₃, A₄ on the inner peripheral wall surface 8 by using the oval adjustment device 40, the oval adjustment device 40 is disposed along a line connecting the pair of points of application A₃, A₄, as depicted in FIG. 6.

The oval adjustment device 40 includes an intermediate rod 42 and a hydraulic jack 44 mounted to at least one of the end portions of the intermediate rod 42, as depicted in FIG. 6. In the oval adjustment device 40 depicted in FIG. 6, hydraulic jacks 44a, 44b are mounted to both of the end portions of the intermediate rod 42.

To apply an outward force in the radial direction to the upper section 10, the intermediate rod 42 is oriented in the radial direction in which a force is to be applied, at the lower end portion 11 of the upper section 10, and the hydraulic jacks 44a, 44b are disposed between the intermediate rod 42 and a pair of respective points of application on the inner peripheral wall surface 8 on which the force is to be applied. Specifically, the intermediate rod 42 is oriented along the line connecting the pair of points of application A₃, A₄, and the hydraulic jack 44a is disposed between the point of application A₃ and the intermediate rod 42 while the hydraulic jack 44b is disposed between the point of application A₄ and the intermediate rod 42.

Then, the hydraulic jacks 44a, 44b apply forces F₂, F₂' directed outward in the radial direction to the respective points of application A₃, A₄ via the intermediate rod 42.

Accordingly, with the oval adjustment device 40, outward forces in the radial direction can be applied to the pair of points of application A₃, A₄ on the inner peripheral wall surface 8 by using the hydraulic jacks 44a, 44b.

In the method of assembling the wind-turbine tower 6 according to some embodiments, when the above described oval adjustment is performed by using the oval adjustment device 40 depicted in FIG. 6, the intermediate rod 42 may be rotated in the circumferential direction while being suspended from above as depicted in FIG. 7, to orient the intermediate rod 42 along the line connecting the pair of points of application A₃, A₄. In this case, a chain block may be used to rotate the intermediate rod 42 in the circumferential direction.

Accordingly, the intermediate rod 42 is rotated while being suspended from above, and thereby it is possible to change the direction of the intermediate rod 42 readily, and thus to orient the intermediate rod 42 along the line connecting the pair of points of application in a desired radial direction.

Furthermore, in the method of assembling the wind-turbine tower 6 according to some embodiments, when the above described oval adjustment is performed by using the oval adjustment device 40 depicted in FIG. 6, the intermediate rod 42 may be moved in the upward-and-downward direction to adjust the position of the intermediate rod 42 in the upward-and-downward direction. In this case, a chain block may be used to move the intermediate rod 42 in the upward-and-downward direction.

Accordingly, the intermediate rod 42 is moved in the upward-and-downward direction while being suspended from above, and thereby it is possible to change the position of the intermediate rod 42 readily in the upward-and-downward direction, and thus to set the intermediate rod 42 in an initial position in the upward and downward direction.

Embodiments of the present invention were described in detail above, but the present invention is not limited thereto, and various amendments and modifications may be implemented.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same" "equal" and "uniform" shall not be construed as indicating only the state in which the feature is strictly equal, but also includes a state in which there is a tolerance or a difference that can still achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

## Claims

1. A method of assembling a wind-turbine tower (6) which comprises a plurality of tower sections (6a-d,10,12) including a lower section (12) and an upper section (10) to be connected to the lower section (12), the method comprising:
a step of measuring a diameter (D_{L}) of an upper end portion (13) of the lower section (12) and a diameter (D_{U}) of a lower end portion (11) of the upper section (10);
a step (S108) of applying a force in a radial direction of the wind-turbine tower (6) to at least one of the upper end portion (13) of the lower section (12) or the lower end portion (11) of the upper section (10) so as to reduce a difference between the diameter (D_{L}) of the upper end portion (13) of the lower section (12) and the diameter (D_{U}) of the lower end portion (11) of the upper section (10), on the basis of a measurement result of each of the diameter of the upper end portion (13) of the lower section (12) and the diameter of the lower end portion (11) of the upper section (10) ;
a step (S110) of suspending the upper section (10) above the lower section (12) while the lower section (12) is disposed upright so that the upper end portion (13) of the lower section (12) and the lower end portion (11) of the upper section (10) face each other; and
a step of connecting the lower end portion (11) of the upper section (10) and the upper end portion (13) of the lower section (12).

2. The method of assembling a wind-turbine tower (6) according to claim 1, further comprising:
a step (S104) of measuring each of a temperature (T_{L}) of the lower section (12) and a temperature (T_{U}) of the upper section (10); and
a step (S106) of correcting the measurement result of each of the diameter (D_{L}) of the upper end portion (13) of the lower section (12) and the diameter (D_{U}) of the lower end portion (11) of the upper section (10), on the basis of measurement results of the temperatures (T_{R},T_{L}).

3. The method of assembling a wind-turbine tower (6) according to claim 1 or 2, further comprising
a step of moving the upper section (10) in an upward-and-downward direction relative to the lower section (12) to adjust a clearance between the lower end portion (11) of the upper section (10) and the upper end portion (13) of the lower section (12) to be within a predetermined range,
wherein the step of connecting includes joining the lower end portion (11) of the upper section (10) and the upper end portion (13) of the lower section (12) by welding.

4. The method of assembling a wind-turbine tower (6) according to any one of claims 1 to 3,
wherein the connecting step includes performing automatic welding along a welding line between the upper end portion (13) and the lower end portion (11) by using an automatic welding machine.

5. The method of assembling a wind-turbine tower (6) according to any one of claims 1 to 4,
wherein the step of applying a force in the radial direction includes applying an outward or inward force in the radial direction to a pair of points of application on an inner peripheral wall surface (8,9) of at least one of the lower end portion (11) of the upper section (10) or the upper end portion (13) of the lower section (12).

6. The method of assembling a wind-turbine tower (6) according to claim 5,
wherein the pair of points of application is disposed on positions facing each other across a center of the wind-turbine tower (6), on the inner peripheral wall surface (8,9).

7. The method of assembling a wind-turbine tower (6) according to claim 5 or 6,
wherein the step of applying a force in the radial direction includes:
connecting a first end of a wire (22) to one of the points of application on the inner peripheral wall surface (8) via a first bracket (24);
connecting a second end of the wire (22) to a second bracket (26);
attaching a third bracket (28) to the other one of the points of application on the inner peripheral wall surface (8);
disposing at least one bolt (30a,30b) so that the at least one bolt (30a,30b) is inserted through a reaction-force receiving plate (29) of the third bracket (28), the reaction-force receiving plate (29) extending along a plane orthogonal to an extending direction of the wire (22), and fixing the at least one bolt (30a,30b) to the second bracket (26) ; and
applying a tension force to the at least one bolt with at least one bolt tensioner (32a,32b) disposed on the side of the other one of the points of application across the reaction-force receiving plate (29).

8. The method of assembling a wind-turbine tower (6) according to claim 5 or 6,
wherein the step of applying a force in the radial direction includes:
orienting an intermediate rod (42) along a line connecting the pair of points of application; and
applying an outward force in the radial direction to each of the points of application via the intermediate rod (42) by using at least one hydraulic jack (44a,44b) disposed between at least one end of the intermediate rod (42) and at least one of the points of application on the inner peripheral wall surface (8).

9. The method of assembling a wind-turbine tower (6) according to claim 8,
wherein the intermediate rod (42) is oriented along the line connecting the pair of points of application by rotating the intermediate rod (42) while the intermediate rod (42) is suspended from above.

10. An oval adjustment device (20;40) for an application of a method according to any one of claims 1-9, applying a tension force to a pair of points of application disposed on an inner peripheral wall surface (8) of a tower section (10) of a wind turbine (1) facing each other across a center of the tower section (10), the oval adjustment device (20;40) comprising:
a wire (22) to extend along a line connecting the pair of points of application;
a first bracket (24) for connecting a first end of the wire (22) to one of the points of application on the inner peripheral wall surface (8);
a second bracket (26) to be connected to a second end of the wire (22);
a third bracket (28) to be mounted to the other one of the points of application on the inner peripheral wall surface (8) and including a reaction-force receiving plate (29) to extend along a plane orthogonal to an extending direction of the wire (22);
at least one bolt (30a,30b) to extend along the wire (22) between the second bracket (26) and the third bracket (28), to be fixed to the second bracket (26), and to be inserted through the reaction-force receiving plate (29) of the third bracket (28); and
at least one bolt tensioner (32a,32b) to be disposed on the side of the other one of the points of application across the reaction-force receiving plate (29), for applying a tension force to the at least one bolt (30a,30b).

11. The oval adjustment device (20;40) according to claim 10,
wherein the third bracket (28) further includes a coupling portion (27) to be disposed on an extension line of the wire (22) and to couple the other one of the points of application and the reaction-force receiving plate (29), and
wherein the at least one bolt tensioner comprises a pair of bolt tensioners (32a,32b) disposed on opposite sides of the coupling portion (29).

## Patentansprüche

1. Ein Verfahren zum Zusammenbauen eines Windturbinenturms (6), der eine Vielzahl von Turmsektionen (6a-d,10,12) einschließlich einer unteren Sektion (12) und einer oberen Sektion (10), die mit der unteren Sektion (12) zu verbinden ist, aufweist, wobei das Verfahren umfasst:
einen Schritt des Messens eines Durchmessers (D_{L}) eines oberen Endabschnitts (13) der unteren Sektion (12) und eines Durchmessers (D_{U}) eines unteren Endabschnitts (11) der oberen Sektion (10),
einen Schritt (S108) des Aufbringens einer Kraft in einer Radialrichtung des Windturbinenturms (6) auf den oberen Endabschnitt (13) der unteren Sektion (12) und/oder den unteren Endabschnitt (11) der oberen Sektion (10), um eine Differenz zwischen dem Durchmesser (D_{L}) des oberen Endabschnitts (13) der unteren Sektion (12) und dem Durchmesser (D_{U}) des unteren Endabschnitts (11) der oberen Sektion (10) zu verringern, auf der Basis eines Messergebnisses sowohl des Durchmessers des oberen Endabschnitts (13) der unteren Sektion (12) als auch des Durchmessers des unteren Endabschnitts (11) der oberen Sektion (10),
einen Schritt (S110) des Aufhängens der oberen Sektion (10) über der unteren Sektion (12), während die untere Sektion (12) aufrecht angeordnet ist, sodass der obere Endabschnitt (13) der unteren Sektion (12) und der untere Endabschnitt (11) der oberen Sektion (10) einander zugewandt sind, und
einen Schritt des Verbindens des unteren Endabschnitts (11) der oberen Sektion (10) und des oberen Endabschnitts (13) der unteren Sektion (12).

2. Ein Verfahren zum Zusammenbauen eines Windturbinenturms (6) gemäß Anspruch 1, ferner mit:
einem Schritt (S104) des Messens jeweils einer Temperatur (T_{L}) der unteren Sektion (12) und einer Temperatur (T_{U}) der oberen Sektion (10), und
einem Schritt (S106) des Korrigierens des Messergebnisses sowohl des Durchmessers (D_{L}) des oberen Endabschnitts (13) der unteren Sektion (12) als auch des Durchmessers (D_{U}) des unteren Endabschnitts (11) der oberen Sektion (10) auf der Basis der Messergebnisse der Temperaturen (T_{R},T_{L})).

3. Das Verfahren zum Zusammenbauen eines Windturbinenturms (6) gemäß Anspruch 1 oder 2, ferner mit
einem Schritt des Bewegens der oberen Sektion (10) in einer Aufwärts-Abwärts-Richtung relativ zu der unteren Sektion (12) zum Einstellen eines Zwischenraums zwischen dem unteren Endabschnitt (11) der oberen Sektion (10) und dem oberen Endabschnitt (13) der unteren Sektion (12) in einem vorbestimmten Bereich,
wobei der Schritt des Verbindens ein Zusammenfügen des unteren Endabschnitts (11) der oberen Sektion (10) und des oberen Endabschnitts (13) der unteren Sektion (12) durch Schweißen umfasst.

4. Das Verfahren zum Zusammenbauen eines Windturbinenturms (6) gemäß einem der Ansprüche 1 bis 3,
wobei der Verbindungsschritt ein Ausführen eines automatischen Schweißens entlang einer Schweißlinie zwischen dem oberen Endabschnitt (13) und dem unteren Endabschnitt (11) durch Verwendung einer automatischen Schweißmaschine umfasst.

5. Das Verfahren zum Zusammenbauen eines Windturbinenturms (6) gemäß einem der Ansprüche 1 bis 4,
wobei der Schritt des Aufbringens einer Kraft in der Radialrichtung ein Aufbringen einer auswärts- oder einwärtsgerichteten Kraft in der Radialrichtung auf ein Paar von Anwendungspunkten an einer Innenumfangswandfläche (8,9) von dem unteren Endabschnitt (11) der oberen Sektion (10) und/oder dem oberen Endabschnitt (13) der unteren Sektion (12) umfasst.

6. Das Verfahren zum Zusammenbauen eines Windturbinenturms (6) gemäß Anspruch 5,
wobei das Paar von Anwendungspunkten an Positionen an der Innenumfangswandfläche (8,9) angeordnet ist, die einander über einer Mitte des Windturbinenturms (6) zugewandt sind.

7. Das Verfahren zum Zusammenbauen eines Windturbinenturms (6) gemäß Anspruch 5 oder 6,
wobei der Schritt des Aufbringens einer Kraft in der Radialrichtung umfasst:
Verbinden eines ersten Endes eines Drahts (22) mit einem der Anwendungspunkte an der Innenumfangswandfläche (8) über eine erste Halterung (24),
Verbinden eines zweiten Endes des Drahts (22) mit einer zweiten Halterung (26),
Anbringen einer dritten Halterung (28) an dem anderen der Anwendungspunkte an der Innenumfangswandfläche (8),
Anordnen von zumindest einem Bolzen (30a,30b) so, dass der mindestens eine Bolzen (30a,30b) durch eine Reaktionskraft-Aufnahmeplatte (29) der dritten Halterung (28) hindurch eingesetzt ist, wobei die Reaktionskraft-Aufnahmeplatte (29) sich entlang einer Ebene orthogonal zu einer Erstreckungsrichtung des Drahts (22) erstreckt, und Befestigen des mindestens einen Bolzens (30a,30b) an der zweiten Halterung (26), und
Aufbringen einer Zugkraft auf den mindestens einen Bolzen mit mindestens einen Bolzenspanner (32a,32b), der an der Seite des anderen der Anwendungspunkte über der Reaktionskraft-Aufnahmeplatte (29) angeordnet ist.

8. Ein Verfahren zum Zusammenbauen eines Windturbinenturms (6) gemäß Anspruch 5 oder 6,
wobei der Schritt des Aufbringens einer Kraft in der Radialrichtung umfasst:
Orientieren eines Zwischenstabs (42) entlang einer Linie, welche das Paar von Anwendungspunkten verbindet, und
Aufbringen einer nach außen gerichteten Kraft in der Radialrichtung auf jeden der Anwendungspunkte über den Zwischenstab (42) durch Verwendung von mindestens einem hydraulischen Heber (44a,44b), der zwischen zumindest einem Ende des Zwischenstabs (42) und zumindest einem der Anwendungspunkte an der Innenumfangswandfläche (8) angeordnet ist bzw. wird.

9. Ein Verfahren zum Zusammenbauen eines Windturbinenturms (6) gemäß Anspruch 8,
wobei der Zwischenstab (42) entlang der Linie orientiert ist bzw. wird, die das Paar von Anwendungspunkten verbindet, durch Drehen des Zwischenstabs (42), während der Zwischenstab (42) von oben abgehängt ist.

10. Eine Oval-Einstellvorrichtung (20;40) für eine Anwendung eines Verfahrens gemäß einem der Ansprüche 1 bis 9, bei dem eine Zugkraft auf ein Paar von Anwendungspunkten aufgebracht wird, die an einer Innenumfangswandfläche (8) einer Turmsektion (10) einer Windturbine (1) angeordnet sind, die einander über einer Mitte der Turmsektion (10) zugewandt sind, wobei die Oval-Einstellvorrichtung (20;40) aufweist:
einen Draht (22), um sich entlang einer die Anwendungspunkte verbindenden Linie zu erstrecken,
eine erste Halterung (24) zum Verbinden eines ersten Endes des Drahts (22) mit einem der Anwendungspunkte an der Innenumfangswandfläche (8),
eine zweite Halterung (26), die mit einem zweiten Ende des Drahts (22) zu verbinden ist,
eine dritte Halterung (28), die an dem anderen der Anwendungspunkte an der Innenumfangswandfläche (8) zu befestigen ist und die eine Reaktionskraft-Aufnahmeplatte (29) aufweist, um sich entlang einer Ebene orthogonal zu einer Erstreckungsrichtung des Drahts (22) zu erstrecken,
zumindest einen Bolzen (30a,30b), um sich entlang des Drahts (22) zwischen der zweiten Halterung (26) und der dritten Halterung (28) zu erstrecken, um an der zweiten Halterung (26) befestigt zu werden, und um durch die Reaktionskraft-Aufnahmeplatte (29) der dritten Halterung (28) hindurch eingesetzt zu werden, und
zumindest einen Bolzenspanner (32a,32b), der an der Seite des anderen der Anwendungspunkte über der Reaktionskraft-Aufnahmeplatte (29) anzuordnen ist, zum Aufbringen einer Zugkraft auf den mindestens einen Bolzen (30a,30b).

11. Die Oval-Einstellvorrichtung (20;40) gemäß Anspruch 10,
wobei die dritte Halterung (28) ferner einen Kupplungsabschnitt (27) aufweist, der an oder auf einer Erweiterungslinie des Drahts (22) anzuordnen ist, und der zum Koppeln des anderen der Anwendungspunkte und der Reaktionskraft-Aufnahmeplatte (29) dient, und
wobei der mindestens eine Bolzenspanner ein Paar von Bolzenspannern (32a,32b) aufweist, die an gegenüberliegenden Seiten des Kopplungsabschnitts (29) angeordnet sind.

## Revendications

1. Procédé d'assemblage d'une tour (6) d'éolienne, qui comprend une pluralité de tronçons (6a-d, 10, 12) de tour, incluant un tronçon (12) inférieur et un tronçon (10) supérieur à relier au tronçon (12) inférieur, le procédé comprenant :
un stade de mesure d'un diamètre (D_{L}) d'une partie (13) d'extrémité supérieure du tronçon (12) inférieur et d'un diamètre (Du) d'une partie (11) d'extrémité inférieure du tronçon (10) supérieur ;
un stade (S108) d'application d'une force dans une direction radiale de la tour (6) d'éolienne à au moins l'une de la partie (13) d'extrémité supérieure du tronçon (12) inférieur ou de la partie (11) d'extrémité inférieure du tronçon (10) supérieur, de manière à réduire une différence entre le diamètre (D_{L}) de la partie (13) d'extrémité supérieure du tronçon (12) inférieur et le diamètre (Du) de la partie (11) d'extrémité inférieure du tronçon (10) supérieur sur la base d'un résultat de mesure de chacun du diamètre de la partie (13) d'extrémité supérieure du tronçon (12) inférieur et du diamètre de la partie (11) d'extrémité inférieure du tronçon (10) supérieur ;
un stade (S110) de suspension du tronçon (10) supérieur au-dessus du tronçon (12) inférieur, alors que le tronçon (12) inférieur est disposé debout, de manière à ce que la partie (13) d'extrémité supérieure du tronçon (12) inférieur et la partie (11) d'extrémité inférieure du tronçon (10) supérieur soient en face l'une de l'autre et
un stade de liaison de la partie (11) d'extrémité inférieure du tronçon (10) supérieur et de la partie (13) d'extrémité supérieure du tronçon (12) inférieur.

2. Procédé d'assemblage d'une tour (6) d'éolienne suivant la revendication 1, comprenant, en outre :
un stade (S104) de mesure d'une température (T_{L}) du tronçon (12) inférieur et d'une température (Tu) du tronçon (10) supérieur et
un stade (S106) de correction du résultat de mesure du diamètre (D_{L}) de la partie (13) d'extrémité supérieure du tronçon (12) inférieur et du diamètre (Du) de la partie (11) d'extrémité inférieure du tronçon (10) supérieur sur la base des résultats de mesure des températures (T_{R}, T_{L}).

3. Procédé d'assemblage d'une tour (6) d'éolienne suivant la revendication 1 ou 2, comprenant, en outre :
un stade de déplacement du tronçon (10) supérieur dans une direction vers le haut et vers le bas par rapport au tronçon (12) inférieur pour régler un jeu entre la partie (11) d'extrémité inférieure du tronçon (10) supérieur et la partie (13) d'extrémité supérieure du tronçon (12) inférieur dans une plage déterminée à l'avance,
dans lequel le stade de liaison comprend la jonction de la partie d'extrémité inférieure du tronçon (10) supérieur et de la partie (13) d'extrémité supérieure du tronçon (12) inférieur par soudure.

4. Procédé d'assemblage d'une tour (6) d'éolienne suivant l'une quelconque des revendications 1 à 3,
dans lequel le stade de liaison comprend effectuer un soudage automatique le long d'une ligne de soudure entre la partie (13) d'extrémité supérieure et la partie (11) d'extrémité inférieure en utilisant une machine à souder automatique.

5. Procédé d'assemblage d'une tour (6) d'éolienne suivant l'une quelconque des revendications 1 à 4,
dans lequel le stade d'application d'une force dans la direction radiale comprend appliquer une force vers l'extérieur ou vers l'intérieur dans la direction radiale à une paire de points d'application sur une surface (8, 9) de paroi périphérique intérieure d'au moins l'une de la partie (11) d'extrémité inférieure du tronçon (10) supérieur ou de la partie (13) d'extrémité supérieure du tronçon (12) inférieur.

6. Procédé d'assemblage d'une tour (6) d'éolienne suivant la revendication 3,
dans lequel la paire de points d'application est disposée en des positions se faisant face de part et d'autre d'un centre de la tour (6) d'éolienne sur la surface (8, 9) de paroi périphérique intérieure.

7. Procédé d'assemblage d'une tour (6) d'éolienne suivant la revendication 5 ou 6,
dans lequel le stade d'application d'une force dans la direction radiale comprend :
relier une première extrémité d'un fil (22) à l'un des points d'application sur la surface (8) de paroi périphérique intérieure par l'intermédiaire d'une première console (24);
relier une seconde extrémité du fil (22) à une deuxième console (26);
attacher une troisième console (28) à l'autre point d'application sur la surface (8) de la paroi périphérique intérieure;
mettre au moins un boulon (30a, 30b), de manière à ce que le au moins un boulon (30a, 30b) soit inséré dans une plaque (29) de réception d'une force de réaction de la troisième console (28), la plaque (29) de réception d'une force de réaction s'étendant suivant un plan orthogonal à une direction d'extension du fil (22), et fixer le au moins un boulon (30a, 30b) à la deuxième console (26 et
appliquer une force de serrage au au moins un boulon par au moins un dispositif (32a, 32b) de serrage de boulon disposé du côté de l'autre point d'application par rapport à la plaque (29) de réception d'une force de réaction.

8. Procédé d'assemblage d'une tour (6) d'éolienne suivant la revendication 5 ou 6,
dans lequel le stade d'application d'une force en direction radiale comprend :
orienter une barre (42) intermédiaire suivant une ligne reliant la paire de points d'application et
appliquer une force vers l'extérieur dans la direction radiale à chacun des points d'application par l'intermédiaire de la tige (42) intermédiaire, en utilisant au moins un vérin (44a, 44b) hydraulique, disposé entre au moins une extrémité de la barre (42) intermédiaire et au moins l'un des points d'application sur la surface (8) de la paroi périphérique intérieure.

9. Procédé d'assemblage d'une tour (6) d'éolienne suivant la revendication 8,
dans lequel la barre (42) intermédiaire est orientée suivant la ligne reliant la paire de points d'application en faisant tourner la barre (42) intermédiaire alors que la barre (42) intermédiaire est suspendue par en haut.

10. Dispositif (20; 40) ovale d'ajustement pour appliquer un procédé suivant l'une quelconque des revendications 1 à 9, en appliquant une force de tension à une paire de points d'application disposée sur une surface (8) de la paroi périphérique intérieure d'un tronçon (10) de tour d'une éolienne (1), se faisant face l'un l'autre de part et d'autre d'un centre du tronçon (10) de la tour, le dispositif (20; 40) ovale d'ajustement comprenant :
un fil (22), qui s'étend suivant une ligne reliant la paire de points d'application;
une première console (24) pour relier une première extrémité du fil (22) à l'un des points d'application sur la surface (8) de la paroi périphérique intérieure;
une deuxième console (26) à relier à une seconde extrémité du fil (22);
une troisième console (28) à monter sur l'autre point d'application sur la surface (8) de la paroi périphérique intérieure et comprenant une plaque (29) de réception d'une force de réaction, qui s'étend suivant un plan orthogonal à une direction d'extension du fil (22);
au moins un boulon (30a, 30b), qui s'étend le long du fil (22) entre la deuxième console (26) et la troisième console (28), à fixer à la deuxième console (26) et à insérer à travers la plaque (29) de réception d'une force de réaction de la troisième console (28) et
au moins un dispositif (32a, 32b) de serrage d'un boulon à mettre du côté de l'autre des points d'application par rapport à la plaque (29) de réception d'une force de réaction pour appliquer une force de serrage au au moins un boulon (30a, 30b) .

11. Dispositif (20; 40) ovale d'ajustement suivant la revendication 10,
dans lequel la troisième console (28) comprend, en outre, une partie (27) d'accouplement à disposer sur une ligne d'extension du fil (22) et pour accoupler l'autre point d'application et la plaque (29) de réception d'une force de réaction et
dans lequel le au moins un dispositif de serrage de boulon comprend une paire de dispositifs (32a, 32b) de serrage de boulon disposée sur des côtés opposés de la partie (29) d'accouplement.
